Europäisches Patentamt

European Patent Office

Office européen des brevets

(11) Publication number: **0 090 334**
**B1**

(12) **EUROPEAN PATENT SPECIFICATION**

(45) Date of publication of patent specification: **12.11.86**

(51) Int. Cl.⁴: **F 17 C 3/04, F 16 L 59/00**

(21) Application number: **83102842.8**

(22) Date of filing: **22.03.83**

(54) Improved fiberglass insulation for mobile cryogenic tankage.

(30) Priority: **29.03.82 US 363097**

(43) Date of publication of application:
**05.10.83 Bulletin 83/40**

(45) Publication of the grant of the patent:
**12.11.86 Bulletin 86/46**

(84) Designated Contracting States:
**AT BE CH DE FR GB IT LI LU NL SE**

(56) References cited:
**DE-B-2 457 264**
**US-A-1 730 153**
**US-A-3 069 042**
**US-A-3 149 742**
**US-A-3 930 375**
**US-A-3 992 169**
**US-A-4 104 783**
**US-A-4 168 014**

(73) Proprietor: **UNION CARBIDE CORPORATION**
**39 Old Ridgebury Road**
**Danbury Connecticut 06817 (US)**

(72) Inventor: **Patterson, Michael Frederick**
**6115 Fairlane Drive**
**Clarence Center 14032, NY. (US)**
Inventor: **Cipolla, Richard Carmine**
**138 Bassett Road**
**Williamsville 14221, NY. (US)**

(74) Representative: **Schwan, Gerhard, Dipl.-Ing.**
**Elfenstrasse 32**
**D-8000 München 83 (DE)**

Courier Press, Leamington Spa, England.

## Description

Technical Field

The present invention relates to an improved method and apparatus for insulating mobile cryogenic storage vessels of the type having a cylindrically shaped inner storage vessel surrounded by a relatively thin outer shell and an intermediate evacuable insulation space therebetween. The outer shell is provided with a plurality of axially-spaced support members extending into the evacuable space for supporting the outer shell against the external atmospheric force which is exerted against it when the intermediate space is evacuated.

Background

It is well-known that cryogenic liquid storage vessels may be insulated by using a double walled construction with insulation material disposed therebetween. Granular or particulate type of insulation material, for example, perlite powder, is generally a more effective insulation at high vacuum (i.e., below about 13 Pa (100 microns of mercury)) and is more economical to use. In cryogenic transport applications in order to minimize weight, the double walled container is designed with a thin outer shell reinforced by axially-spaced internal support members or rings. The presence of these internal support members within the intermediate evacuable space, however, makes it difficult to fill the space with any insulation that is not granular. Granular insulation is particularly useful because it can simply be poured into the insulation space in such manner that all of the space, even those around the supports, are readily filled.

However, a disadvantage associated with the use of granular or particulate type insulation is its tendency to settle and compact. Settling causes loss of insulation from the upper sections of a storage vessel, hereby increasing overall heat transfer to the cryogenic liquid stored within the vessel. This effect is accelerated when the storage vessel is subjected to outside forces, such as vibration which is normally encountered in mobile applications. Another contributor to the settling of granular insulation in cryogenic storage vessels is thermal stress induced by thermal cycling; that is, the expansion and contraction of the inner storage vessel caused by normal use of the vessel.

Perlite insulation is generally considered a low density material; however, as compared with some fiberglass insulation, it has a relatively high density. This is a particularly important consideration in mobile transport applications, where the total over-the-road vehicle weight may be limited by regulations. The weight of the unfilled vehicle should therefore be minimized in order to maximize the pay load. This is difficult to do with perlite insulation since relative to some fiberglass insulation it not only has a high initial fill density, but its tendency to settle, necessitates the addition of even more perlite.

US—A—1 730 153 discloses a method for insulating a double-walled tank with fibrous insulation where metallic bands having circumferentially spaced blocks (e.g. of wood) attached thereto are wrapped at selected intervals around a cylindrical inner vessel. The fibrous insulating material (e.g., kapok fiber) is then wrapped around the inner vessel, totally enclosing the spaced, block-equipped bands. The outer shell is then wrapped around the insulated inner vessel and is anchored to the blocks on the spaced bands, e.g., by screws passing through the shell. This construction causes severe compression of the insulation over the blocks in order that they may function as structural members and transmit the shell load without further deformation. Moreover, in a long vessel the shell must be assembled piecemeal since there is no space to permit telescoping of the inner vessel into a unitized outer shell. Consequently, this technique is very labor-intensive and expensive.

US—A—4 104 783 and US—A—4 168 014 describe respectively, a method for insulation and an insulation system for cryogenic transport intended as a replacement for the conventionally used perlite insulation. These patents disclose a method for, and an insulation system whereby fiber glass insulation is compressively wrapped around an inner storage container. The insulation is squeezed to a lesser thickness to increase the density of the insulation and to allow the inner vessel to be telescopingly positioned within the outer shell. The squeezing is accomplished by wrapping each layer of insulation with a continuous wire mesh. Tension is maintained on the wire mesh by a rod which is withdrawn once the inner vessel is positioned within the outer shell. Once the rod is removed, the tension is relaxed, and the insulation expands to fill the space between the outer shell and the inner vessel. However, in order to utilize this procedure the fiberglass insulation employed must be compressed to a relatively high density (64 to 96 kg/m³ (4 to 6 lbs/cubic feet)). This insulation system is disadvantageous because of the aforementioned weight considerations.

It is also known from US—A—4 168 014 to wrap a fiberglass insulation about the inner storage vessel to substantially fill the space between this vessel and the outer shell, and to wrap mesh means about the fiberglass insulation for holding the insulation in place, wherein the fiberglass insulation is provided in multiple separate layers with the mesh means retaining each and every layer. The space between the inner vessel and the outer shell may be evacuated.

The above installation approach cannot easily be adapted to the conventionally designed over-the-road cryogenic storage vessels which employ a thin outer shell with internal support rings. Applying all of the insulation to the inner container will leave the spaces between the axially-spaced rings at least partially devoid of insulation. Additionally, the insulation, whether compressed or not, will not be able to expand in the vicinity of the rings resulting in a further increase in the solid conductivity of the insulated apparatus.

## Object of the Invention

It is an object of the present invention to provide insulated double-walled cryogenic storage vessels having a thin outer shell and internal support members, and which avoid the aforementioned disadvantages of the prior art.

It is an other object of the present invention to provide an improved method for fabricating fiberglass insulated double-walled cryogenic storage vessels.

## Summary of Invention

The above and other objects which will be apparent to those skilled in the art are achieved by the present invention, one aspect of which relates to:

a method for fabricating a storage vessel useful for transporting cryogenic liquid comprising the steps of:

— providing a cylindrically shaped closed inner storage vessel having a filling and discharge port and a vapor vent,

— providing a first insulation of fiberglass batting to the outer wall of the inner storage vessel, and

— telescopingly positioning said inner storage vessel within a relatively thin coaxial outer shell, said inner storage vessel and said shell forming an evacuable space therebetween, said method being characterized by

— providing said outer shell with a plurality of axially-spaced circumferential support members extending into said evacuable space, said support members being fixedly attached to and reinforcing said outer shell against the external atmospheric force applied thereto upon evacuation of said evacuable space,

— non-compressively securing a second insulation of at least one layer of fiberglass batting to the cylindrical portion of the inner wall of said outer shell so as to substantially fill the space between said support members,

— providing said first insulation as a layer of non-compressed fiberglass batting in sufficient amount to fill all but a small annular portion of the intermediate evacuable space not occupied by said second insulation, while also shielding the inner ends of the axially-spaced support members from the inner storage vessel,

— non-compressively securing additional layers of fiberglass insulation batting to the ends of the inner storage vessel, and

— welding end plates to the outer shell.

Another aspect of this invention relates to a storage vessel suitable for the transportation of cryogenic fluid comprising:

— a cylindrically shaped inner storage vessel closed at each end, and a thin cylindrically shaped outer shell closed at each end and spaced outwardly therefrom, said inner storage vessel and said outer shell defining an evacuable space therebetween,

— a first insulation of fiberglass batting secured to the outer wall of the inner storage vessel, and

— means for supporting the inner storage vessel on the outer shell, said storage vessel being characterized in that

— said outer shell has a plurality of axially-spaced support members extending into the evacuable space for supporting the external atmospheric load applied to the outer shell upon evacuation of said space,

— a second insulation of fiberglass batting is non-compressively secured to the cylindrical portion of the inner wall of the outer shell so as to fill the spaces between the axially-spaced support members,

— said first insulation of fiberglass batting is non-compressively secured and arranged to shield the inner ends of the axially-spaced support members from the inner storage vessel,

— an annular space of from about 6.35 mm to 31.75 mm is provided between said first and second insulations of fiberglass batting,

— additional layers of fiberglass insulation batting are non-compressively secured to the ends of the inner storage vessel, and

— end plates are welded to the outer shell.

An alternative method for fabricating a storage vessel useful for transporting cryogenic liquid comprising the steps of:

— providing a cylindrically shaped closed inner storage vessel having a filling and discharge port and a vapor vent,

— providing an insulation of fiberglass batting, and

— telescopingly positioning said inner storage vessel within a relatively thin coaxial outer shell, said inner storage vessel and said shell forming an evacuable space therebetween for receiving said insulation of fiberglass batting, is characterized by

— providing said outer shell with a plurality of axially-spaced circumferential support members extending into said evacuable space, said support members being fixedly attached to and reinforcing said outer shell against the external atmospheric force applied thereto upon evacuation of said evacuable space,

— forming said insulation by non-compressively securing a first layer of fiberglass batting to the inner wall of the outer shell in sufficient amount to fill the space between adjacent support members and by providing a second layer of non-compressed fiberglass batting to the inner wall of the outer shell in sufficient amount to shield the inner ends of the axially-spaced support members from the inner storage vessel, said insulation filling all but a small annular portion of the intermediate evacuable space,

— non-compressively securing additional layers of fiberglass insulation batting to the ends of the inner storage vessel, and

— welding end plates to the outer shell.

The preferred vacuum levels maintained in the evacuable space are below 6.7 Pa (50 microns of mercury).

## Brief Description of the Drawings

Figure 1 is an illustration of a typical tank tractor-trailer truck used for transporting cryogenic fluid in a storage vessel made in accordance with a preferred embodiment of the present invention.

Figure 2 is a longitudinal elevational view, taken partly in cross-section, of a double walled vacuum storage vessel such as shown in Figure 1, illustrating another preferred embodiment of the present invention;

Figure 3 is a cross-sectional view taken along line 3—3 of Figure 2;

Figure 4 is a partial cross-sectional elevational view of another preferred embodiment of the present invention, illustrating means for assembling a cryogenic trailer;

Figure 5 is an end view of the assembly apparatus taken about line 5—5 of Figure 4;

Figure 6 is a partial cross-sectional view showing the means for supporting the inner vessel in spaced relation to the outer shell; and

Figure 7 is a partial cross-sectional elevational view of an alternative vessel made in accordance with the present invention;

## Detailed Description

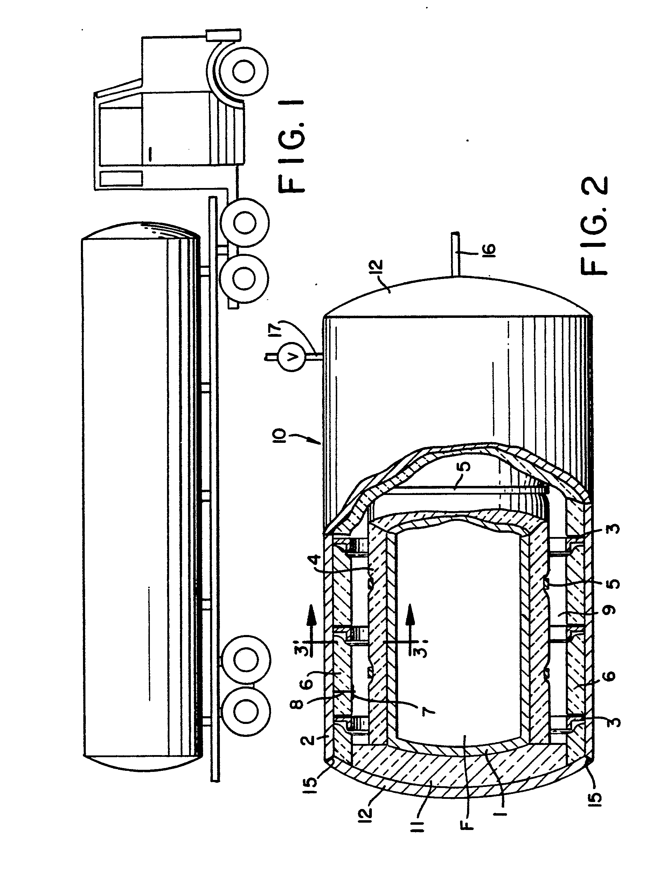

Figure 1 is an illustration of a tank tractor-trailer truck used for transporting cryogenic fluid in storage vessels made in accordance with the present invention. The present invention's method of insulating cryogenic storage vessels is particularly suited for large trailers-trucks and railroad tank cars.

With non-compressively secured fiberglass insulation, it is possible to enter the vacuum space to make repairs or modifications without excessive delay and the inconvenience caused by granular insulation. In a typical mobile cryogenic transport, reduction of the insulation weight by up to 363 kg (800 pounds) is possible by utilizing fiberglass. This savings in insulation weight can now be allocated to additional cryogenic liquid.

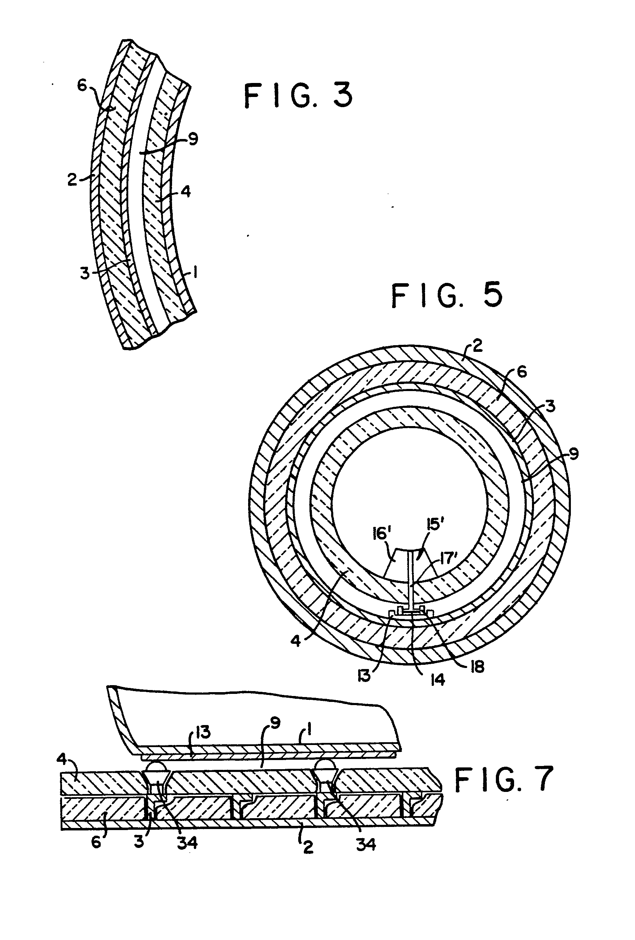

Cryogenic storage vessel 10 shown in Figures 2 and 3 consists of an inner storage vessel 1 and an outer shell 2 surrounding vessel 1 in spaced relation thereto. Both the inner vessel 1 and the outer shell 2 may be fabricated from two or more cylindrical sections. Materials suitable for constructing the inner vessel 1 and the outer shell 2 include stainless steel or aluminum and carbon steel or aluminum respectively. When made from stainless steel, the minimum thickness of the inner vessel 1 is typically about 2.5 mm (0.1 inch) thick. A greater thickness may be necessary for the inner vessel 1 since it may have to withstand significant internal pressurization caused by the leakage of heat into the cryogenic fluid. The magnitude of this pressure is generally limited by a conventional relief valve or vapor vent 17 that communicates with the cryogenic fluid F inside vessel 1. To reduce the overall weight of the assembly, the outer shell 2 is made from a material as thin as possible, on the order of 2.5 mm (0.1 inch) in thickness. In order to support the outer shell 2 against its own weight and against the force of the atmospheric pressure imposed by evacuation of the space between inner vessel 1 and the outer shell 2, a series of support members 3, which in the embodiment shown are structural L-rings, are axially-spaced along the inner wall of shell 2. External supports are not generally used because they exert unnecessary drag on the assembly during transportation. Forms of other than L-shaped support members 3, may be used, for example T-shaped support rings can also be used.

The inner vessel 1 is substantially non-compressively wrapped with a single layer of fiberglass batting 4. The fiberglass is held in place on the inner vessel by means of metal bands 5, which extend laterally around the insulation. Ordinary steel strip material, as commonly used in the packaging industry, is suitable for the metal bands 5. Wires may also be used to hold the fiberglass in place. The insulation is held in place at intervals with only as much force as is necessary to keep it from sliding off the inner vessel during acceleration of the assembly. As a result, the overall density of the insulation is not substantially affected. An important function of this layer of insulation is to shield the inner ends of the support members 3 from the inner vessel 1. Absent such shielding, significant quantities of heat would be transferred to the inner vessel by conduction from the support members 3.

An insulation of a single layer of fiberglass batting 6 is also attached to the outer shell 2. Individual sections of this insulation 6 are inserted within the spaces forward between the axially-spaced support members 3. The insulation 6 is held in place on the upper walls of shell 2 by means of friction nut 7 attached to the studs 8 that are welded to shell 2.

The entire process of assembly takes place with the storage vessel (see Fig. 2) situated in a horizontal position. The storage vessel will be transported via large trailer-trucks (see Fig. 1) or railroad cars and therefore will always be situated in the horizontal position during transportation as well as while in use.

The thickness of the fiberglass layers applied to the inner vessel 1 and the outer shell 2 are such that a small annular portion 9 of the space between vessel 1 and shell 2 is not occupied by the fiberglass battings when the inner vessel 1 is positioned within the outer shell 2. This also permits the intermediate annular space to be evacuated to a high vacuum, i.e., below about 13 Pa (100 microns of mercury), more rapidly. This is important, since higher vacuum levels are generally needed with fiberglass system than with perlite insulation in order to obtain essentially equivalent performance. One advantage of having annular portion or space 9 is that removal of the inner vessel 1 from the outer shell 2 can easily be accomplished. This annular space 9 should be on the order of 6 to 32 mm (0.25 to 1.25 inches) in width; preferably between about 13 to 25 mm (0.5 to 1.0 inch) in width.

Insulation suitable for the present invention should be composed of small diameter fiberglass fibers (i.e., an average fiber diameter below about 12 µm) provided in boards or batts having a density between about 16 and 48 kg/m³ (1 and 3 pounds per cubic foot). Such insulation is commercially available in rolled batts, between 13 and 76 mm (1/2 and 3 inches) thick and in densities between 9.6 and 32 kg/m³ (0.6 and 2.0 pounds per cubic foot). The insulation is used in a non-compressed form so as to maximize its insulation effectiveness at high vacuum, while minimizing the quantity and therefore, the weight of insulation used.

After securing the insulation to the inner vessel 1 and the outer shell 2, the inner vessel 1 is telescopingly placed into the shell. Once the inner vessel 1 has been completely inserted into the outer shell 2, the ends of the assembly may be provided with additional fiberglass batting 11, and the spherical end plates 12 of the assembly are welded to the outer shell 2 at 15. Once assembled, the tank may be filled and emptied of cryogenic fluid by means of the filling and discharge port 16.

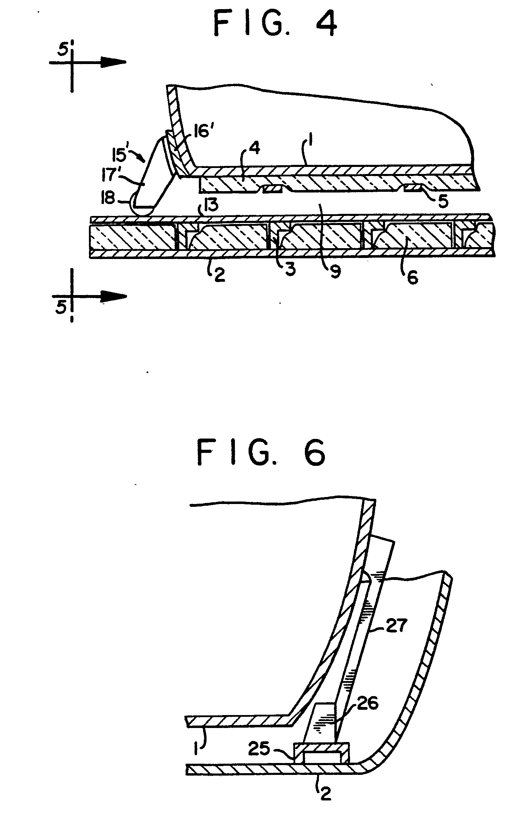

Figures 4 and 5 illustrate procedures for telescopingly positioning the inner vessel 1 within the outer shell 2 in accordance with the present invention. During at least part of this procedure, the inner vessel can be supported by means external to the assembly, such as by a sling supported from a crane (not shown). A rigid "U" shaped track 13 is laid on the support members 3 of the outer shell 2. Track 13 may be temporary or may be a permanent fixture and is provided with a groove or runner 14 into which a wheel assembly 15' is adapted to slide. The wheel assembly 15' is attached to the head of the inner vessel 1, and when engaged with track 13, provides additional support during assembly. The wheel assembly 15' consists of a faceplate 16' welded to the head of the inner vessel 1, from which a strut 17' having wheels 18 is attached. The strut 17' is preferably attached by bolts (not shown) to a flange (not shown) on the faceplate 16' so that it may be removed after the assembly procedure. This complicated track and wheel arrangement is necessary because of the size of the storage vessel. A typical inner vessel 1 is approximately 10.7 m (35 feet) in length, 1.8 m (5 feet) in diameter and would hold approximately 28000 liter (7400 gallons) of cryogenic liquid. A typical outer vessel is approximately 11.3 m (37 feet) in length and 2.0 m (6 feet 8 inches) in diameter. ·

The inner vessel is supported in spaced relation to the outer shell by any-well-known load-rod design, — as for example, partly illustrated in Figure 6, the particulars of which are well-known to those skilled in this technology. Briefly, an annular U-shaped support ring 25 is attached to the outer shell 2. Ring 25 has a number of radially directed flanges 26 attached thereto at circumferentially spaced positions around the outer shell 2. Radially oriented support beams 27 are then attached at one end to the flanges 26 and at their other end to the inner vessel 1. The present invention is not limited to any particular means for supporting the inner vessel 1 from the outer shell 2, since any conventional means is suitable as long as it does not easily conduct heat.

Figure 7 shows an alternative arrangement wherein the track 13 is securely fastened onto the inner vessel 1 and a wheel assembly 34 is secured by suitable struts to some of the support members 3. In this alternative embodiment of the invention, all of the insulation can be secured to the outer shell 2. At least one layer of fiberglass batting 6 must be applied to the outer shell so as to fill the space between adjacent stiffening rings, yet still allow a suitable annular portion 9 in the intermediate space for telescoping the inner vessel 1 within the outer shell 2. An additional layer of fiberglass batting 4 must also be provided to shield the inner ends of the axially-spaced support members 3 from the inner vessel 1, so as to reduce conductive heat in-leakage.

In the practice of this invention, vacuum levels below 6.7 Pa (50 microns of mercury) are required in order that overall performance as good as or better than a perlite insulated trailer be maintained. Because of the annular portion (clearance) 9 between the inner vessel 1 and the outer shell 2 these vacuum levels are easily achieved and maintained.

In the preferred embodiment wherein insulation is secured to the outer shell 2 and the inner vessel 1, gas is evacuated through the insulation secured to the inner vessel 1 into the annular portion 9 and gas is simultaneously evacuated through the insulation secured to the outer vessel 2 into the annular portion. Therefore, the gas is evacuated through only one-half of the total insulation thickness (that insulation which is secured either to the outer shell 2 or to the inner vessel 1) and then through the annular portion 9 thereby yielding a relatively higher vacuum conductance when compared to a system in which the entire intermediate evacuable space is filled with insulation.

In order to maintain these vacuum levels, a molecular sieve adsorbent is generally provided adjacent to the inner vessel 1 within the intermediate evacuable space as will be recognized by one skilled in vacuum technology for cryogenic storage vessels. The molecular sieve adsorbent facilitates the evacuation process by removing additional gases and thereby shortening the evacuation time.

**Claims**

1. A method for fabricating a storage vessel (10) useful for transporting cryogenic liquid (F) comprising the steps of:
— providing a cylindrically shaped closed inner storage vessel (1) having a filling and discharge port (16) and a vapor vent (17),
— providing a first insulation of fiberglass batting (4) to the outer wall of the inner storage vessel (1), and
— telescopingly positioning said inner storage vessel (1) within a relatively thin coaxial outer shell (2), said inner storage vessel and said shell forming an evacuable space therebetween, characterized by
— providing said outer shell (2) with a plurality of axially-spaced circumferential support members (3) extending into said evacuable space, said support members being fixedly attached to and reinforcing said outer shell against the external atmospheric force applied thereto upon evacuation of said evacuable space,
— non-compressively securing a second insulation of at least one layer of fiberglass batting (6) to the cylindrical portion of the inner wall of said outer shell (2) so as to substantially fill the space between said support members (3),
— providing said first insulation as a layer of non-compressed fiberglass batting (4) in sufficient amount to fill all but a small annular portion (9) of the intermediate evacuable space not occupied by said second insulation (6), while also shielding the inner ends of the axially-spaced support members (3) from the inner storage vessel (1),
— non-compressively securing additional layers of fiberglass insulation batting (11) to the ends of the inner storage vessel (1), and
— welding endplates (12) to the outer shell (2).

2. A method for fabricating a storage vessel (10) useful for transporting cryogenic liquid (F) comprising the steps of:
— providing a cylindrically shaped closed inner storage vessel (1) having a filling and discharge port (16) and a vapor vent (17),
— providing an insulation of fiberglass batting (4, 6), and
— telescopingly positioning said inner storage vessel (1) within a relatively thin coaxial outer shell (2), said inner storage vessel and said shell forming an evacuable space therebetween for receiving said insulation of fiberglass batting (4, 6),
characterized by
— providing said outer shell (2) with a plurality of axially-spaced circumferential support members (3) extending into said evacuable space, said support members being fixedly attached to and reinforcing said outer shell against the external atmospheric force applied thereto upon evacuation of said evacuable space,
— forming said insulation by non-compressively securing a first layer of fiberglass batting (6) to the inner wall of the outer shell (2) in sufficient amount to fill the space between adjacent support members (3) and by providing a second layer of non-compressed fiberglass batting (4) to the inner wall of the outer shell (2) in sufficient amount to shield the inner ends of the axially-spaced support members (3) from the inner storage vessel (1), said insulation filling all but a small annular portion (9) of the intermediate evacuable space,

— non-compressively securing additional layers of fiberglass insulation batting (11) to the ends of the inner storage vessel (1), and
— welding endplates (12) to the outer shell (2).

3. The method of claims 1 or 2 wherein the vacuum levels maintained in the evacuable space are below 6.7 Pa (50 microns of mercury).

4. A storage vessel suitable for the transportation of cryogenic liquid (F) comprising:
— a cylindrically shaped inner storage vessel (1) closed at each end, and a thin cylindrically shaped outer shell (2) closed at each end and spaced outwardly therefrom, said inner storage vessel and said outer shell defining an evacuable space therebetween,
— a first insulation of fiberglass batting (4) secured to the outer wall of the inner storage vessel (1), and
— means (25, 27) for supporting the inner storage vessel (1) on the outer shell (2),
characterized in that
— said outer shell (2) has a plurality of axially-spaced support members (3) extending into the evacuable space for supporting the external atmospheric load applied to the outer shell upon evacuation of said space,
— a second insulation of fiberglass batting (6) is non-compressively secured to the cylindrical portion of the inner wall of the outer shell (2) so as to fill the spaces between the axially-spaced support members (3),
— said first insulation of fiberglass batting (4) is non-compressively secured and arranged to shield the inner ends of the axially-spaced support members (3) from the inner storage vessel (1),
— an annular space (9) of from about 6.35 mm to 31.75 mm is provided between said first and second insulations of fiberglass batting (4, 6),
— additional layers of fiberglass insulation batting (11) are non-compressively secured to the ends of the inner storage vessel (1), and
— endplates (12) are welded to the outer shell (2).

5. A storage vessel suitable for the transportation of cryogenic liquid (F) comprising:
— a cylindrically shaped inner storage vessel (1) closed at each end, and a thin cylindrically shaped outer shell (2) closed at each end and spaced outwardly therefrom, said inner storage vessel and said outer shell defining an evacuable space therebetween,
— an insulation of fiberglass batting (4, 6) provided within said evacuable space, and
— means (25, 27) for supporting the inner storage vessel (1) on the outer shell (2),
characterized in that
— said outer shell (2) has a plurality of axially-spaced support members (3) extending into the evacuable space for supporting the external atmospheric load applied to the outer shell upon evacuation of said space,
— said insulation comprises a first layer of fiberglass batting (6) non-compressively supported from the inner wall of the outer shell

6

(2) in sufficient amount to fill the space between adjacent support members (3), and a second layer of fiberglass batting (4) non-compressively secured to the inner wall of the outer shell (2) in sufficient amount to shield the inner ends of the axially spaced support members (3) from the inner vessel (1), said insulation filling all said evacuable space with the exception of an annular space (9) of from about 6.35 mm to 31.75 mm between the inner wall of said insulation and the outer wall of the inner storage vessel (1),

— additional layers of fiberglass insulation batting (11) are non-compressively secured to the ends of the inner storage vessel (1), and

— endplates (12) are welded to the outer shell (2).

6. A storage vessel as in claims 4 or 5 wherein the vacuum levels maintained in the evacuable space are below 6.7 Pa (50 microns of mercury).

**Patentansprüche**

1. Verfahren zum Herstellen eines für den Transport von cryogener Flüssigkeit (F) geeigneten Speicherbehälters (10), bei dem:

— ein zylindrisch geformter, geschlossener, innerer Speicherbehälter (1) mit einer Füll- und Auslaßöffnung (16) und einem Dampfablaß (17) vorgesehen wird,

— eine erste Isolation aus Glasfasermatte (4) an der Außenwand des inneren Speicherbehälters (1) vorgesehen wird, und

— der innere Speicherbehälter (1) teleskopartig in einem relativ dünnen, koaxialen Außenmantel (2) angeordnet wird, wobei der innere Speicherbehälter und der Mantel zwischen sich einen evakuierbaren Raum bilden, dadurch gekennzeichnet, daß

— der Außenmantel (2) mit einer Mehrzahl von axial in Abstand angeordneten, in Umfangsrichtung verlaufenden, in den evakuierbaren Raum hineinreichenden Stützgliedern (3) versehen wird, die an dem Außenmantel fest angebracht werden und den Außenmantel gegen die externe Atmosphärenkraft verstärken, die auf diesen nach Evakuieren des evakuierbaren Raumes aufgebracht wird,

— eine zweite Isolation aus mindestens einer Lage Glasfasermatte (6) an dem zylindrischen Teil der Innenwand des Aussenmantels (2) ohne Zusammenpressen befestigt wird, um den Raum zwischen den Stützgliedern (3) im wesentlichen auszufüllen,

— die erste Isolation als eine Lage aus nichtzusammengepreßter Glasfasermatte (4) in ausreichender Menge vorgesehen wird, um den von der zweiten Isolation (6) nicht eingenommenen evakuierbaren Zwischenraum bis auf einen kleinen ringförmigen Teil (9) auszufüllen und auch die inneren Enden der axial in Abstand angeordneten Stützglieder (3) gegenüber dem inneren Speicherbehälter (1) abzuschirmen,

— zusätzliche Lagen aus Glasfaserisoliermatte (11) an den Enden des inneren Speicherbehälters (1) ohne Zusammenpressen befestigt werden, und

— Endplatten (12) mit dem Außenmantel (2) verschweißt werden.

2. Verfahren zum Herstellen eines für den Transport von cryogener Flüssigkeit (F) geeigneten Speicherbehälters (10), bei dem:

— ein zylindrisch geformter, geschlossener, innerer Speicherbehälter (1) mit einer Füll- und Auslaßöffnung (16) und einem Dampfablaß (17) vorgesehen wird,

— eine Isolation aus Glasfasermatte (4, 6) vorgesehen wird, und

— der innere Speicherbehälter (1) teleskopartig in einem relativ dünnen, koaxialen Außenmantel (2) angeordnet wird, wobei der innere Speicherbehälter und der Mantel zwischen sich einen evakuierbaren Raum zur Aufnahme der Isolation aus Glasfasermatte (4, 6) bilden, dadurch gekennzeichnet, daß

— der Außenmantel (2) mit einer Mehrzahl von axial in Abstand angeordneten, in Umfangsrichtung verlaufenden, in den evakuierbaren Raum hineinreichenden Stützgliedern (3) versehen wird, die an dem Außenmantel fest angebracht werden und den Außenmantel gegen die externe Atmosphärenkraft verstärken, die auf diesen nach Evakuieren des evakuierbaren Raumes aufgebracht wird,

— die Isolation gebildet wird, indem eine erste Lage aus Glasfasermatte (6) an der Innenwand des Außenmantels (2) ohne Zusammenpressen in ausreichender Menge befestigt wird, um den Raum zwischen benachbarten Stützgliedern (3) auszufüllen, und indem eine zweite Lage aus nicht zusammengepreßter Glasfasermatte (4) an der Innenwand des Außenmantels (2) in ausreichender Menge angeordnet wird, um die inneren Enden der axial in Abstand liegenden Stützglieder (3) gegenüber dem inneren Speicherbehälter (1) abzuschirmen, wobei die Isolation den evakuierbaren Zwischenraum bis auf einen kleinen ringförmigen Teil (9) ausfüllt,

— zusätzliche Lagen aus Glasfaserisoliermatte (11) an den Enden des inneren Speicherbehälters (1) ohne Zusammenpressen befestigt werden, und

— Endplatten (12) mit dem Außenmantel (2) verschweißt werden.

3. Verfahren nach Anspruch 1 oder 2, wobei die in dem evakuierbaren Raum aufrechterhaltenen Vakuumwerte unter 6,7 Pa (50 Mikron Quecksilber) liegen.

4. Für den Transport von cryogener Flüssigkeit (F) geeigneter Speicherbehälter mit:

— einem zylindrisch geformten, an jedem Ende geschlossenen, inneren Speicherbehälter (1) und einem davon nach außen in Abstand angeordneten, an jedem Ende geschlossenen, dünnen, zylindrisch geformten Außenmantel (2), wobei der innere Speicherbehälter und der Außenmantel zwischen sich einen evakuierbaren Raum bilden,

— einer an der Außenwand des inneren Speicherbehälters (1) befestigten ersten Isolation aus Glasfasermatte (4), und

— Mitteln (25, 27) zum Abstützen des inneren Speicherbehälters (1) an dem Außenmantel (2), dadurch gekennzeichnet, daß

— der Außenmantel (2) mit einer Mehrzahl von axial in Abstand angeordneten, in den evakuierbaren Raum hineinreichenden Stützgliedern (3) zum Auffangen der auf den Aussenmantel nach Evakuieren des Raumes aufgebrachten externen Atmosphärenlast versehen ist,

— eine zweite Isolation aus Glasfasermatte (6) an dem zylindrischen Teil der Innenwand des Außenmantels (2) ohne Zusammenpressen befestigt ist, um die Räume zwischen den axial in Abstand angeordneten Stützgliedern (3) auszufüllen,

— die erste Isolation aus Glasfasermatte (4) ohne Zusammenpressen befestigt und so angeordnet ist, daß sie die inneren Enden der axial in Abstand angeordneten Stützglieder (3) gegenüber dem inneren Speicherbehälter (1) abschirmt,

— zwischen der ersten und zweiten Isolation aus Glasfasermatte (4, 6) ein Ringraum (9) von etwa 6,35 mm bis 31,75 mm vorgesehen ist,

— zusätzliche Lagen aus Glasfaserisoliermatte (11) an den Enden des inneren Speicherbehälters (1) ohne Zusammenpressen befestigt sind, und

— Endplatten (12) mit dem Außenmantel (2) verschweißt sind.

5. Für den Transport von cryogener Flüssigkeit (F) geeigneter Speicherbehälter mit:

— einem zylindrisch geformten, an jedem Ende geschlossenen, inneren Speicherbehälter (1) und einem davon nach außen in Abstand angeordneten, an jedem Ende geschlossenen, dünnen, zylindrisch geformten Außenmantel (2), wobei der innere Speicherbehälter und der Außenmantel zwischen sich einen evakuierbaren Raum bilden,

— einer in dem evakuierbaren Raum angeordneten Isolation aus Glasfasermatte (4, 6), und

— Mitteln (25, 27) zum Abstützen des inneren Speicherbehälters (1) an dem Außenmantel (2), dadurch gekennzeichnet, daß

— der Außenmantel (2) mit einer Mehrzahl von axial in Abstand angeordneten, in den evakuierbaren Raum hineinreichenden Stützgliedern (3) zum Auffangen der auf den Aussenmantel nach Evakuieren des Raumes aufgebrachten externen Atmosphärenlast versehen ist,

— die Isolation eine erste Lage aus Glasfasermatte (6), die von der Innenwand des Außenmantels (2) ohne Zusammenpressen in ausreichender Menge abgestützt ist, um den Raum zwischen benachbarten Stützgliedern (3) zu füllen, und eine zweite Lage aus Glasfasermatte (4) aufweist, die an der Innenwand des Außenmantels (2) ohne Zusammenpressen in ausreichender Menge angebracht ist, um die inneren Enden der axial in Abstand liegenden Stützglieder (3) gegenüber dem Innenbehälter (1) abzuschirmen, wobei die Isolation den evakuierbaren Raum bis auf einen Ringraum (9) von etwa 6,35 mm bis 31,75 mm zwischen der Innenwand der Isolation und der Außenwand des inneren Speicherbehälters (1) ausfüllt,

— zusätzliche Lagen aus Glasfaserisoliermatte (11) an den Enden des inneren Speicherbehälters (1) ohne Zusammenpressen befestigt sind, und

— Endplatten (12) mit dem Außenmantel (2) verschweißt sind.

6. Speicherbehälter nach Anspruch 4 oder 5, wobei die in dem evakuierbaren Raum aufrechterhaltenen Vakuumwerte unter 6,7 Pa (50 Mikron Quecksilber) liegen.

**Revendications**

1. Procédé de fabrication d'une cuve (10) de stockage utile au transport d'un liquide cryogénique (F), comprenant les étapes qui consistent:

— à utiliser une cuve intérieure fermée (1) de stockage de forme cylindrique présentant un orifice (16) de remplissage et de déchargement et un évent (17) de vapeur,

— à prévoir une première isolation en nappe (4) de fibres de verre sur la paroi extérieure de la cuve intérieure (1) de stockage, et

— à positionner télescopiquement ladite cuve intérieure (1) de stockage dans une enveloppe extérieure coaxiale relativement mince (2), ladite cuve intérieure de stockage et ladite enveloppe formant entre elles un espace dans lequel le vide peut être fait,
caractérisé en ce qu'il consiste

— à équiper ladite enveloppe extérieure (2) de plusieurs éléments circonférentiels (3) de support, espacés axialement, pénétrant dans ledit espace à vide, lesdits éléments de support étant reliés fixement à ladite enveloppe extérieure et la renforçant contre la force que lui applique l'atmosphère extérieure lors de l'établissement du vide dans ledit espace à vide,

— à fixer de façon non compressive une seconde isolation d'au moins une couche en nappe (6) de fibres de verre à la partie cylindrique de la paroi intérieure de ladite enveloppe extérieure (2) afin de remplir sensiblement l'espace entre lesdits éléments (3) de support,

— à utiliser ladite première isolation comme couche en nappe non comprimée (4) de fibres de verre en quantité suffisante pour remplir la totalité, sauf une petite partie annulaire (9), de l'espace à vide intermédiaire non occupé par ladite seconde isolation (6), tout en protégeant également de la cuve intérieure (1) de stockage les extrémités intérieures des éléments (3) de support espacés axialement,

— à fixer sans les comprimer d'autres couches en nappe (11) d'isolation en fibres de verre aux extrémités de la cuve intérieure (1) de stockage, et

— à souder des plaques extrêmes (12) à l'enveloppe extérieure (2).

2. Procédé de fabrication d'une cuve (10) de stockage utile au transport d'un liquide cryogénique (F), comprenant les étapes qui consistent:

— à utiliser une cuve intérieure fermée (1) de stockage de forme cylindrique présentant un orifice (16) de remplissage et de déchargement et un évent (17) de.vapeur,

— à prévoir une isolation en nappe (4, 6) de fibres de verre, et

— à positionner télescopiquement ladite cuve intérieure (1) de stockage dans une enveloppe extérieure coaxiale relativement mince (2), ladite cuve intérieure de stockage et ladite enveloppe formant entre elles un espace à vide destiné à recevoir ladite isolation en nappe (4, 6) de fibres de verre,
caractérisé en ce qu'il consiste

— à équiper ladite enveloppe extérieure (2) de plusieurs éléments circonférentiels (3) de support espacés axialement, pénétrant dans ledit espace à vide, lesdits éléments de support étant reliés fixement à ladite enveloppe extérieure qu'ils renforcent contre la force qui lui est appliquée par l'atmosphère extérieure à la suite de l'établissement du vide dans ledit espace à vide,

— à former ladite isolation par la fixation sans compression d'une première couche en nappe (6) de fibres de verre à la paroi intérieure de l'enveloppe extérieure (2), en quantité suffisante pour remplir l'espace entre des éléments de support adjacents (3) et par la mise en place d'une seconde couche en nappe (4) de fibres de verre non comprimées à la paroi intérieure de l'enveloppe extérieure (2) en quantité suffisante pour protéger de la cuve intérieure (1) de stockage les extrémités intérieures des éléments (3) de support espacés axialement, ladite isolation remplissant la totalité, sauf une petite partie annulaire (9), de l'espace à vide intermédiaire,

— à fixer sans compression d'autres couches en nappe (11) d'isolation en fibres de verre aux extrémités de la cuve intérieure (1) de stockage, et

— à souder des plaques extrêmes (12) à l'enveloppe extérieure (2).

3. Procédé selon les revendications 1 ou 2, dans lequel les niveaux de vide maintenus dans l'espace à vide sont au-dessous de 6,7 Pa (50 micromètres de mercure).

4. Cuve de stockage convenant au transport d'un liquide cryogénique (F), comprenant:

— une cuve intérieure (1) de stockage de forme cylindrique fermée à chaque extrémité, et une mince enveloppe extérieure (2) de forme cylindrique fermée à chaque extrémité et espacée à l'extérieur de la cuve, ladite cuve intérieure de stockage et ladite enveloppe extérieure définissant entre elles en espace à vide,

— une première isolation en une nappe (4) de fibres de verre fixée à la paroi extérieure de la cuve intérieure (1) de stockage, et

— des moyens (25, 27) destinés à supporter la cuve intérieure (1) de stockage sur l'enveloppe extérieure (2),
caractérisée en ce que

— ladite enveloppe extérieure (2) comporte plusieurs éléments (3) de support espacés axialement, pénétrant dans l'espace à vide afin de supporter la charge exercée par l'atmosphère extérieure sur l'enveloppe extérieure à la suite du vide dudit espace,

— une seconde isolation en une nappe (6) de fibres de verre est fixée sans être comprimée à la partie cylindrique de la paroi intérieure de l'enveloppe extérieure (2) afin de remplir les espaces entre les éléments (3) de support espacés axialement,

— ladite première isolation en nappe (4) de fibres de verre est fixée sans être comprimée et agencée de façon à protéger de la cuve intérieure (1) de stockage les extrémités intérieures des éléments (3) de support espacés axialement,

— un espace annulaire (9) d'environ 6,35 mm à 31,75 mm est prévu entre lesdites première et seconde isolations en nappe (4, 6) de fibres de verre,

— des couches supplémentaires de nappe (11) d'isolation en fibres de verre sont fixées sans être comprimées aux extrémités de la cuve intérieure (1) de stockage, et

— des plaques extrêmes (12) sont soudées à l'enveloppe extérieure (2).

5. Cuve de stockage convenant au transport d'un liquide cryogénique (F), comprenant:

— une cuve intérieure (1) de stockage de forme cylindrique fermée à chaque extrémité, et une mince enveloppe extérieure (2) de forme cylindrique fermée à chaque extrémité et espacée à l'extérieur de la cuve, ladite cuve intérieure de stockage et ladite enveloppe extérieure définissant entre elles un espace à vide,

— une isolation en nappe (4, 6) de fibres de verre prévue dans ledit espace à vide, et

— des moyens (25, 27) pour le support de la cuve intérieure (1) de stockage sur l'enveloppe extérieure (2),
caractérisée en ce que

— ladite enveloppe extérieure (2) comporte plusieurs éléments (3) de support espacés axialement, pénétrant dans l'espace à vide pour supporter la charge exercée sur l'enveloppe extérieure par l'atmosphère extérieure à la suite du vide dudit espace,

— ladite isolation comprend une première couche en nappe (6) de fibres de verre supportée sans être comprimée par la paroi intérieure de l'enveloppe extérieure (2), en quantité suffisante pour remplir l'espace entre éléments de support adjacents (3), et une seconde couche en nappe (4) de fibres de verre fixée sans être comprimée à la paroi intérieure de l'enveloppe extérieure (2), en quantité suffisante pour protéger de la cuve intérieure (1) les extrémités intérieures des éléments (3) de support espacés axialement, ladite isolation remplissant la totalité dudit espace à vide, à l'exception d'un espace annulaire (9) d'environ 6,35 mm à 31,75 mm entre la paroi intérieure de ladite isolation et la paroi extérieure de la cuve intérieure (1) de stockage,

— des couches supplémentaires en nappe (11) d'isolation en fibres de verre sont fixées sans être comprimées aux extrémités de la cuve intérieure (1) de stockage, et

— des plaques extrêmes (12) sont soudées à l'enveloppe extérieure (2).

6. Cuve de stockage selon les revendications 4 ou 5, dans laquelle les niveaux de vide maintenus dans l'espace à vide sont au-dessous de 6,7 Pa (50 micromètres de mercure).

FIG. I

FIG. 2

FIG. 3

FIG. 5

FIG. 7

# FIG. 4

# FIG. 6